# EUROPEAN PATENT SPECIFICATION

(11) **EP 3 296 716 B1**
(45) Date of publication and mention of the grant of the patent: **22.05.2019**
(21) Application number: 15892298.9
(22) Date of filing: 14.07.2015
(51) Int. Cl.: G01M 13/00

(54) **THREE-PIN DETECTION MACHINE FOR WORM**
DREI-BOLZEN-DETEKTIONSMASCHINE FÜR SCHNECKE
MACHINE DE DÉTECTION À TROIS BROCHES POUR VIS SANS FIN

(30) Priority: 15.05.2015 CN 201510249207
(43) Date of publication of application: 21.03.2018
(73) Proprietor: Luo, Rong, Suzhou, Jiangsu 215000 (CN)
(72) Inventor: LUO, Rong, Suzhou city Jiangsu 215000 (CN); LU, Hui, Suzhou city Jiangsu 215000 (CN); WAN, Bao, Suzhou city Jiangsu 215000 (CN); JING, Shentong, Suzhou city Jiangsu 215000 (CN)
(74) Representative: Hellmich, Wolfgang
(86) International application number: PCT/CN2015/083937
(87) International publication number: WO 2016/183920

(56) References cited:
- EP-A1- 2 555 069
- CN-A- 101 957 190
- CN-A- 103 454 086
- CN-U- 203 190 927
- CN-U- 204 214 792
- CN-U- 204 214 792
- CN-Y- 201 093 994
- DE-U1-202014 006 698
- US-A1- 2009 319 077

## Description

### FIELD OF THE INVENTION

Present invention relates to an inspection device for axial worm component in automobile steering wheel, more particularly, a three pins axial worm inspection device.

### BACKGROUND OF THE INVENTION

In the current technology, typically a three pins inspection machine (adapting a three pins inspection or a three pins measurement) is used for inspecting the axial worm component in automobile steering wheel. The three pins inspection machine commonly uses a tray to load a quantity of axial worms waiting for inspection, then a mechanical hand picks up each individual axial worm on the loading tray and transfer the axial worm to an inspection device (typically an optical sensing device), and after the axial worm is inspected the mechanical hand then place the inspected axial worm into different trays categorized by it's accuracy classes. The patent document US 2009/319077 A1 discloses an inspection machine.

### SUMMARY OF THE INVENTION

The problems to be solve in the present invention: in a three pins inspection machine to, how to arrange the loading trays of the uninspected axial worms, different trays of accuracy classes, the axial worm inspection device, and the mechanical hand for the layout of the three pins inspection machine to be more rational and to increase utilization of the space.

The present invention offers the following solutions:
a three pins inspection machine which comprising: a chassis, a mechanical hand, an axial worm inspection device, an input system of the uninspected axial worms, a first class axial worms carrying system, a second class axial worms carrying system, a third class axial worms carrying tray mechanism and a fourth class axial worms carrying tray mechanism;
the axial worm inspection device which comprising a first axial worm inspection device and a second axial worm inspection device;
the input system of the uninspected axial worms which comprising an input track of the uninspected axial worms, a carrying tray mechanism of the uninspected axial worms, and an empty carrying tray output track;
the first class axial worms carrying system which comprising a first class axial worms carrying tray mechanism, an empty carrying tray first input track, and a loaded tray first output track;
the second class axial worms carrying system which comprising a second class axial worms carrying tray mechanism, an empty carrying tray second input track, a loaded tray second output track;
the chassis is in a square box structure, the chassis which comprising a vertically arranged first side wall, a second wide wall, a third side wall, and a fourth side wall, the first side wall, the second wide wall, the third side wall, and the fourth side wall are surrounded to form a square, wherein, the first side is paralleled with the third side wall; the first side wall is provided with a uninspected axial worms input opening, the second side wall is provided with a loaded tray first output opening and a loaded tray second output opening, the third side wall is provided with a loaded tray third output opening and a loaded tray fourth output opening, and the fourth side wall is provided with an empty carrying tray output opening, an empty carrying tray first input opening , and an empty carrying tray second output opening;
the mechanical hand is arranged is the center of the square formed by the first, second, third , and fourth side wall;
the first axial worm inspection device is arranged to the inner side of the first side wall, and the second axial worm inspection device is arranged to the inner side of the fourth side wall;
the uninspected axial worm carrying tray mechanism is arranged to the inner side of the junction of the first and second side wall, the uninspected axial worms input track passes through the uninspected axial worms input opening to feed the uninspected axial worms carrying tray mechanism with trays loaded with uninspected axial worms, the empty carrying tray output track is located below the uninspected axial worms input track, the uninspected axial worms carrying tray mechanism which comprising a third lifting cylinders for driving the uninspected axial worms carrying tray mechanism to lift and lower, when the third lifting cylinders are extending, the uninspected axial worms carrying tray mechanism connects with the uninspected axial worms input track, when the lifting cylinders are in zero position, the uninspected axial worms carrying tray mechanism connects with the empty carrying tray output track, and the output end of the empty carrying tray output track passes through empty carrying tray output opening on the fourth side wall;

The first class axial worms carrying tray mechanism which is arranged to the inner side of the second side wall, the first class axial worms carrying tray mechanism is provided with a first lifting cylinders for driving the first class axial worms carrying tray mechanism to life and lower, when the first lifting cylinders are in zero position, the first class axial worms carrying tray mechanism connects with the first input track, the empty carrying tray first input track feeds the first class axial worm carrying tray mechanism with empty carrying trays, the input end of the empty carrying tray first input track is arranged at the empty carrying tray first input opening on the fourth side wall, when the first lifting cylinders are extending, the first class axial worm carrying tray mechanism connects with the loaded tray first output track, the loaded tray first output track outputs loaded trays on the first class axial worms carrying tray mechanism from the three pins inspection machine, and the output end of the loaded tray first output track passes through the loaded tray first output opening on the second side wall;
the second class axial worm carrying tray mechanism which is arranged to the inner side of the second side wall, the second class axial worms carrying tray mechanism is provided with a second lifting cylinders for driving the second class axial worms carrying tray mechanism to life and lower, when the second lifting cylinders are in zero position, the second class axial worms carrying tray mechanism connects with the empty carrying tray second input track, the empty carrying tray second input track feeds the second class axial worm carrying tray mechanism with empty carrying trays, the input end of the empty carrying tray second input track is arranged at the empty carrying tray second input opening on the fourth side wall, when the second lifting cylinders are extending, the second class axial worm carrying tray mechanism connects with the loaded tray second output track, the loaded tray second output track outputs the loaded tray on the second class axial worms carrying tray mechanism from the three pins inspection machine, and the output end of the loaded tray second output track passes through the loaded tray second output opening on the second side wall;
the first class axial worm carrying tray mechanism and the second class axial worm carrying tray mechanism are juxtapose placed; and
the third class axial worm carrying tray mechanism and the fourth class axial worm carrying tray mechanism are arranged to the inner side of third side wall, the third class axial worm carrying tray mechanism and the fourth class axial worm carrying tray mechanism are arranged respectively close to the loaded tray third output opening and loaded tray output opening on the third side wall. The third class axial worm carrying tray mechanism and the fourth class axial worm carrying tray mechanism are juxtapose placed.

### BREIF DESCRIPTION OF DRAWINGS

Fig. 1 is a structural view of the present invention three pins axial worm inspection machine;
Fig. 2 is a top plane view of the inspection machine in Fig. 1;
Fig. 3 is a bottom plane view of the inspection machine in Fig. 1;
Fig. 4 is a left side view of the inspection machine in Fig. 1;
Fig. 5 is a right side view of the inspection machine from Fig. 4;
Fig. 6 is a right side view of the inspection machine from Fig. 5;
Fig. 7 is a top plane of the uninspected axial worm carrying tray mechanism, first class axial worm carrying tray mechanism and second class axial worm carrying tray mechanism in Fig. 3;
Fig. 8 is top plane view of the roller carriage in the first class axial worm carrying tray mechanism in Fig. 7;
Fig. 9 is a right side view of the uninspected axial worm carrying tray mechanism from Fig. 7;
Fig. 10 is a bottom plane view of the Fig. 9;
Fig. 11 is a structural view of the first axial worm inspection device in Fig. 3; and
Fig. 12 is a structural view of the second axial worm inspection device in Fig. 3.

### DETAILED DESCRIPTION OF THE INVENTION :

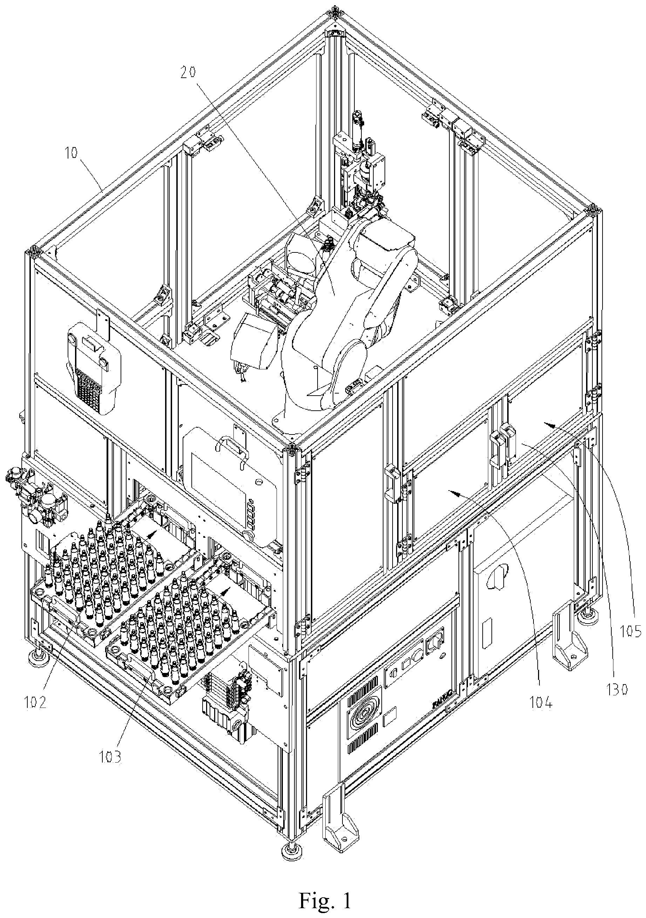

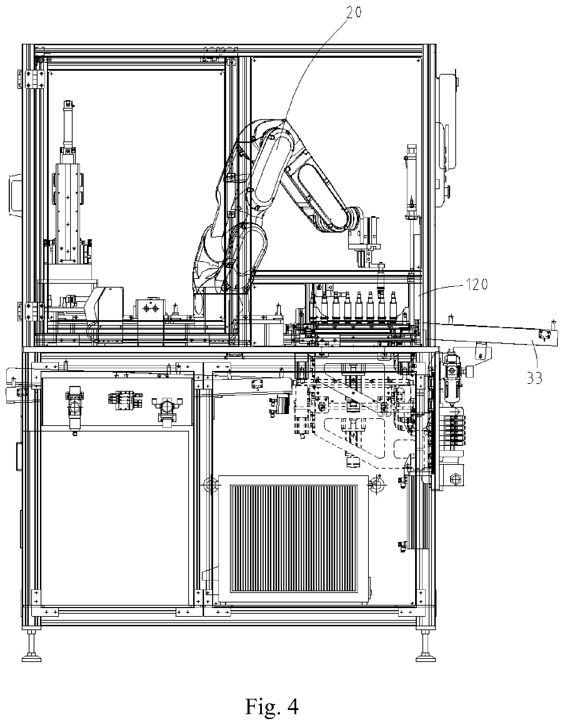

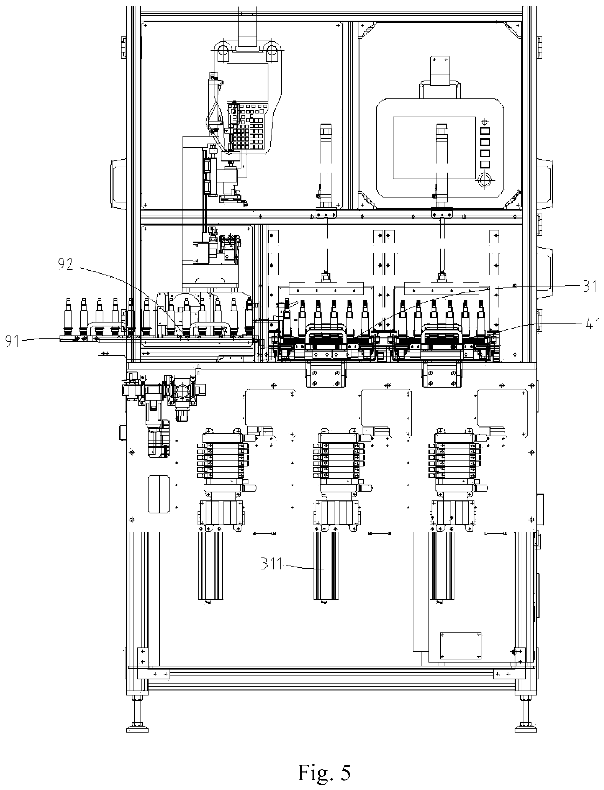

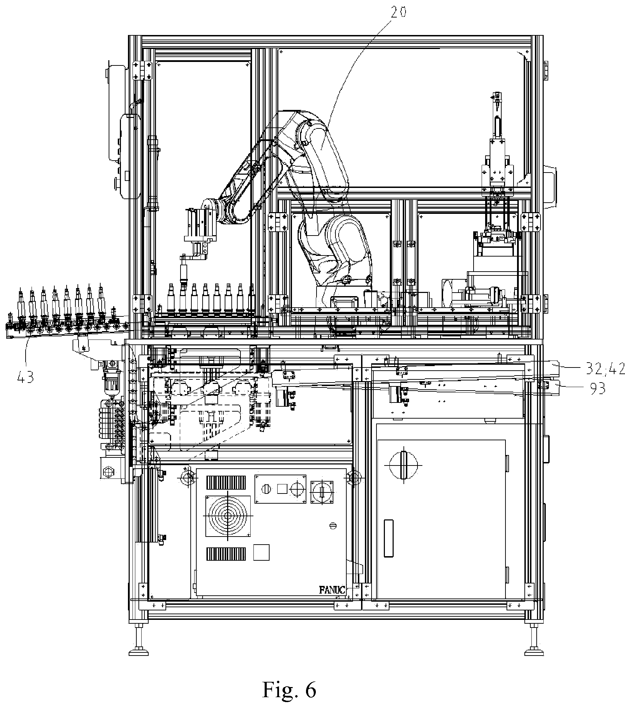

In combination of Fig. 1 - Fig. 6, a three pins inspection machine which comprising: a chassis 10, a mechanical hand 20, an axial worm inspection device, an input system of the uninspected axial worms, a first class axial worms carrying system, a second class axial worms carrying system, a third class axial worms carrying tray mechanism 50 and a fourth class axial worms carrying tray mechanism 60. Wherein, the axial worm inspection device which comprising a first axial worm inspection device 70 and a second axial worm inspection device 80; wherein the input system of the uninspected axial worms which comprising an uninspected axial worms input track 91, an uninspected axial worms carrying tray mechanism 92, and an empty carrying tray carrying output track 93; the first class axial worms carrying system which comprising a first class axial worms carrying tray mechanism 31, an empty carrying tray first input track 32, and a loaded tray first output track 33; the second class axial worms carrying system which comprising a second class axial worms carrying tray mechanism 41, an empty carrying tray second input track 42, a loaded tray second output track 43.

In combination of Fig. 1 - Fig. 3, the chassis 10 is in a square box structure, the chassis 10 which comprising a vertically arranged first side wall 11, a second wide wall 12, a third side wall 13, and a fourth side wall 14, the first side wall, the second wide wall, the third side wall, and the fourth side wall are surrounded to form a square, wherein, the first side is paralleled with the third side wall; the first side wall is provided with a uninspected axial worms input opening 101, the second side wall is provided with a loaded tray first output opening 102 and a loaded tray second output opening 103, the third side wall is provided with a loaded tray third output opening 104 and a loaded tray fourth output opening 105, and the fourth side wall is provided with an empty carrying tray output opening 106, an empty carrying tray first input opening 107, and an empty carrying tray second output opening 108.

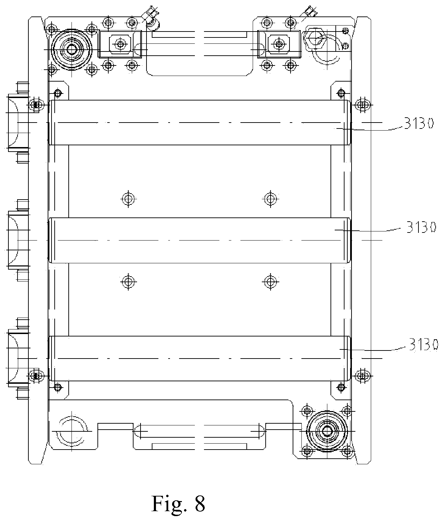

In combination of Fig. 1 and Fig. 8, the mechanical hand 20 is arranged is the center of the square formed by the first, second, third , and fourth side wall.

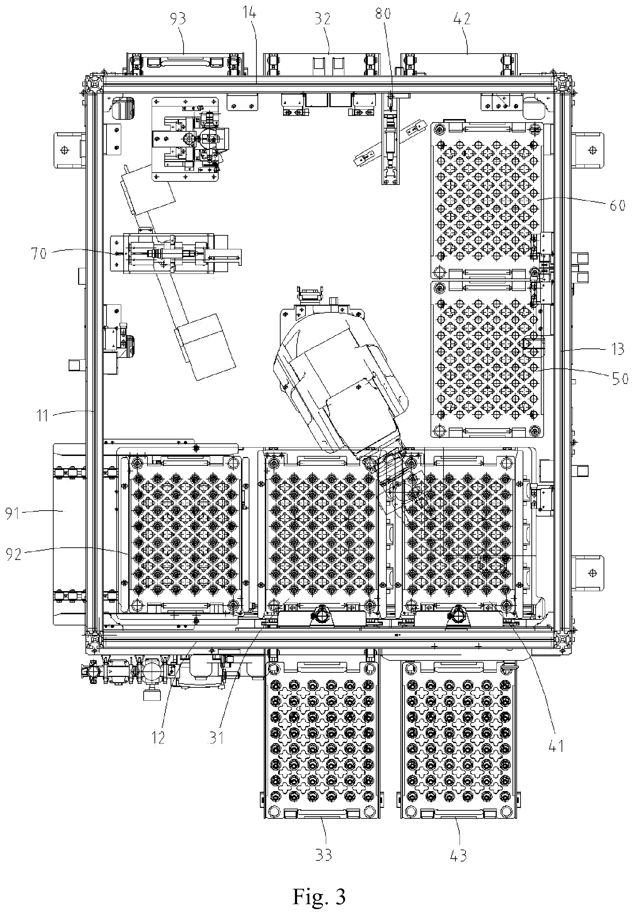

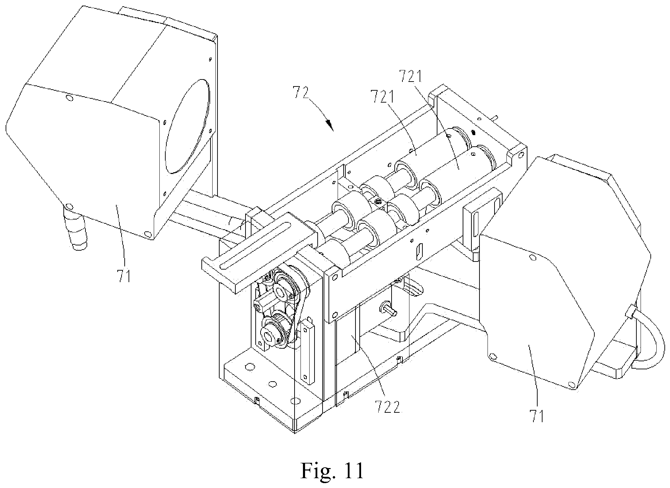

As shown in Fig. 3, the first axial worm inspection device 70 is arranged to the inner side of the first side wall. As shown in Fig. 11, the first axial worm inspection device 70 which comprising a pair of sensing heads 71 and a axial worm self-turning device 72; the axial worm self -turning device which comprising a pair of juxtaposed turning rods 721 and a motor 722 for driving the pair of turning rods to rotate synchronously, the uninspected axial worms are placed on and in between the pair of turning rods 721; and the pair of sensing heads are placed to the two sides of the axial worm self-turning device.

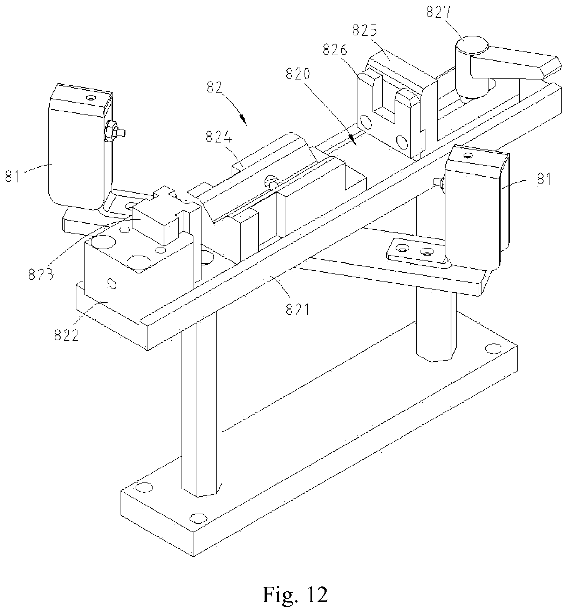

As shown in Fig. 3, the second axial worm inspection device 80 is arranged to the inner side of the fourth side wall. As shown in Fig. 12, the second axial worm inspection device 80 which comprising a pair of fiber optic sensors 81 and an axial worm resting device 82; the axial worm resting device which comprising a base panel 821, a fixing piece 822, a first positioning piece 823, a supporting piece 824, a sliding piece 825, a second fixing piece 826, and a threaded fixing member 827; the base panel is provided with sliding slot 820, the fixing piece is fixed in the sliding slot, the fixing piece is provided with slot, the first positioning piece snaps into the slot, the cross cut section of the supporting piece is in V shape, the supporting piece is fixed in the sliding slot, the supporting piece is used for supporting the uninspected axial worms, the sliding piece is provided with long sliding hole, the threaded fixing member passes through sliding hole then connects with the base panel, threaded fixing member fixes the sliding piece in the sliding slot, the second positioning piece is fixed on the sliding piece; the first positioning piece and the second positioning piece are arranged opposite to each other and to the two sides of the supporting piece; and the pair of fiber optic sensors are arranged to the two sides of the axial worm resting device.

As shown in Fig. 3, the uninspected axial worm carrying tray mechanism 92 is arranged to the inner side of the junction of the first and second side wall, the uninspected axial worms input track 91 passes through the uninspected axial worms input opening to feed the uninspected axial worms carrying tray mechanism with trays loaded with uninspected axial worms, the empty carrying tray output track 93 is located below the uninspected axial worms input track, the uninspected axial worms carrying tray mechanism which comprising a third lifting cylinders 921 for driving the uninspected axial worms carrying tray mechanism to lift and lower, when the third lifting cylinders are extending, the uninspected axial worms carrying tray mechanism connects with the uninspected axial worms input track, when the lifting cylinders are in zero position, the uninspected axial worms carrying tray mechanism connects with the empty carrying tray output track, and the output end of the empty carrying tray output track passes through empty carrying tray output opening on the fourth side wall.

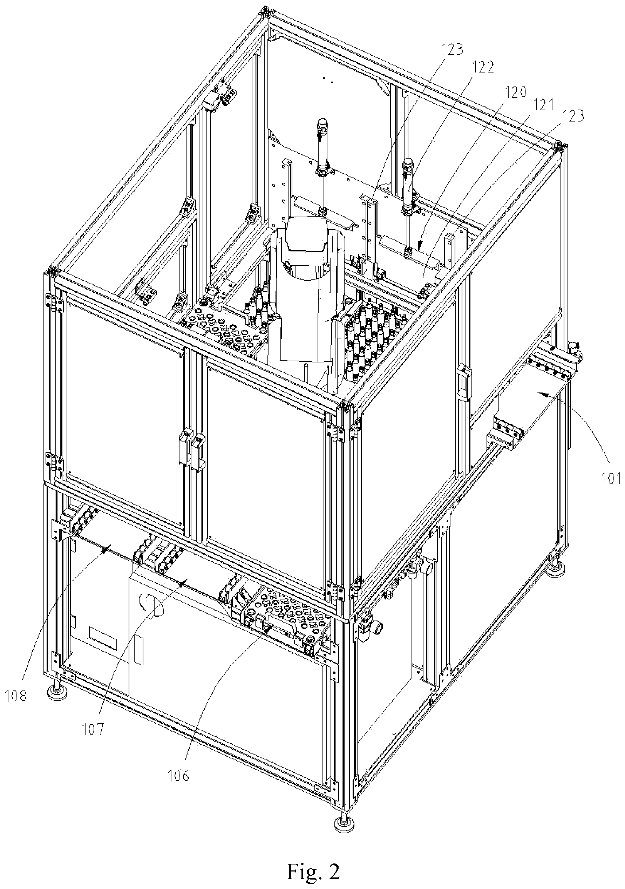

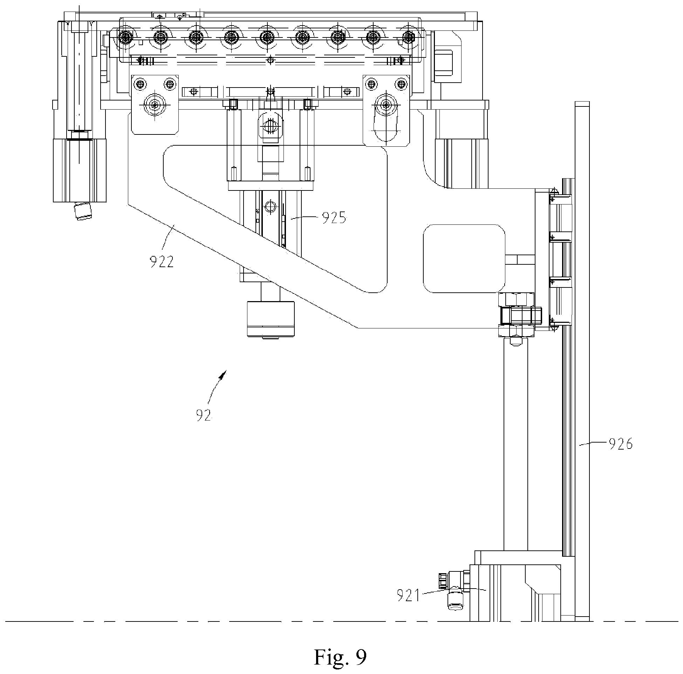

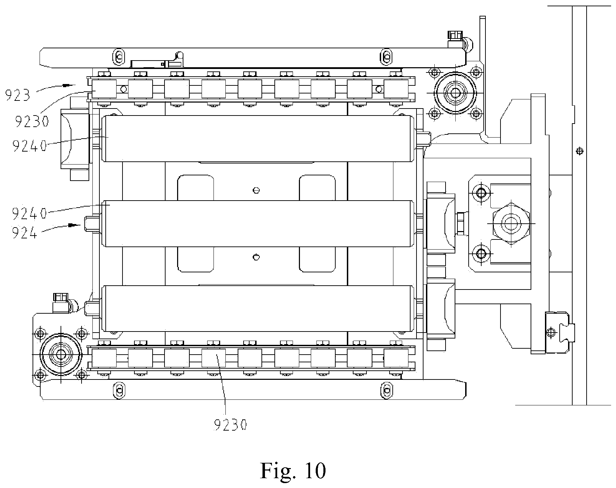

The above described uninspected axial worm carrying tray mechanism 92, in combination with Fig. 9 and Fig. 10, which comprising a chassis 922, a roller wheel carriage 923, a roller carriage 924 and an empty carrying tray discharging cylinder 925. The roller carriage is installed on the chassis 922, the roller carriage which comprising a set of leveled and juxtaposed electric roller 9240, the roller carriage which comprising an input end and an output end in relation to the feeding direction of the set of electric roller; the roller wheel carriage which comprising two rows of leveled and juxtaposed roller wheels 9230, the two rows of roller wheels are provided with an input end and an output end in relation to the feeding direction of the roller wheels; the roller wheel carriage and roller carriage are independent to each other, the feeding direction of the electrical roller is perpendicular to the feeding direction of the roller wheels, the two rows of roller wheels are arranged to the front of the input end and to the back of the output end respectively; the input end of the roller wheel carriage is hinged to the chassis, the empty carrying tray discharging cylinder is fixed on the chassis, the empty carrying tray discharging cylinder is arranged below the roller wheel carriage and the roller carriage, the free end of the piston rod of the empty carrying tray discharging cylinder is hinged to the center of the bottom of the roller wheel carriage, when the empty carrying tray discharging cylinder is in zero position, the roller wheel carriage is in leveled position and the top height of the two rows of the roller wheels is lower than the top height of the set of electrical roller, when the empty carrying tray discharging cylinder is in extending positioning, the roller wheel carriage turns in a certain degree of angle, the roller wheel carriage turns in a certain degree of angle where the top height of the two rows of the roller wheels is higher than the top height of the set of electric roller;
the above described uninspected axial worm carrying tray mechanism 92, in combination with Fig. 9 and Fig. 10, the uninspected axial worm carrying tray mechanism 92 which further comprising a vertically arranged supporting plate 926, the third lifting cylinder 921 is fixed onto the side wall of the supporting plate; the side wall of the supporting plate is provided with guide track, the chassis is provided with a sliding piece, the sliding piece couples with the guide track, the piston rod of the third lifting cylinder is vertically arranged and is fixed with the base of the chassis. In combination of Fig. 2, Fig. 3 and Fig. 4, when the third lifting cylinder is extending, the roller carriage in the uninspected axial worm carrying tray mechanism connects with the uninspected axial worm input track 91, when the lifting cylinder is in zero position, the turned certain degree angle roller wheel carriage in the uninspected axial worm carrying tray mechanism connects with empty carrying tray output track 93.

In combination of Fig. 3, Fig. 7 and Fig. 8, the first class axial worms carrying tray mechanism 31 which is arranged to the inner side of the second side wall, the first class axial worms carrying tray mechanism is provided with a first lifting cylinders 311 for driving the first class axial worms carrying tray mechanism to life and lower, when the first lifting cylinders are in zero position, the first class axial worms carrying tray mechanism connects with the empty carrying tray first input track 32, the empty carrying tray first input track feeds the first class axial worm carrying tray mechanism with empty carrying trays, the input end of the empty carrying tray first input track is arranged at the empty carrying tray first input opening on the fourth side wall, when the first lifting cylinders are extending, the first class axial worm carrying tray mechanism connects with the loaded tray first output track 33, the loaded tray first output track outputs the loaded tray on the first class axial worms carrying tray mechanism from the three pins inspection machine, and the output end of the loaded tray first output track passes through the loaded tray first output opening on the second side wall.

The above described first class axial worm carrying tray mechanism 31, in combination of Fig. 3, Fig. 7 and Fig. 8, the first class axial worm carrying tray mechanism 31 which comprising a chassis 312 and a roller carriage 313 installed on the chassis 312, the roller carriage which comprising a set of leveled and juxtaposed electric roller 3130, the roller carriage which comprising an input end and an output end in relation to the feeding direction of the set of electric roller;
the above described first class axial worm carrying tray mechanism 31, in combination of Fig. 3, Fig. 7 and Fig. 8, the first class axial worm carrying tray mechanism 31 which further comprising a vertically arranged supporting plate 314, the first lifting cylinder 311 is fixed onto the side wall of the supporting plate; the side wall of the supporting plate is provided with guide track, the chassis is provided with a sliding piece, the sliding piece couples with the guide track, the piston rod of the third lifting cylinder is vertically arranged and is fixed with the base of the chassis. In combination of Fig. 2, Fig. 3, Fig. 4 and Fig. 6, when the first lifting cylinder is in zero position, the back end of the input end of the roller carriage in the first class axial worm carrying tray mechanism connects with the empty carrying tray first input track 32, and when the first lifting cylinder is extending, the front end of the input end of the roller carriage in the first class axial worm carrying tray mechanism connects with loaded tray first output track 33.

As shown in Fig. 3, the second class axial worm carrying tray mechanism 41 which is arranged to the inner side of the second side wall, the second class axial worms carrying tray mechanism is provided with a second lifting cylinders for driving the second class axial worms carrying tray mechanism to life and lower, when the second lifting cylinders are in zero position, the second class axial worms carrying tray mechanism connects with the empty carrying tray second input track 42, the empty carrying tray second input track feeds the second class axial worm carrying tray mechanism with empty carrying trays, the input end of the empty carrying tray second input track is arranged at the empty carrying tray second input opening on the fourth side wall, when the second lifting cylinders are extending, the second class axial worm carrying tray mechanism connects with the loaded tray second output track 43, the loaded tray second output track outputs the loaded tray on the second class axial worms carrying tray mechanism from the three pins inspection machine, and the output end of the loaded tray second output track passes through the loaded tray second output opening on the second side wall.

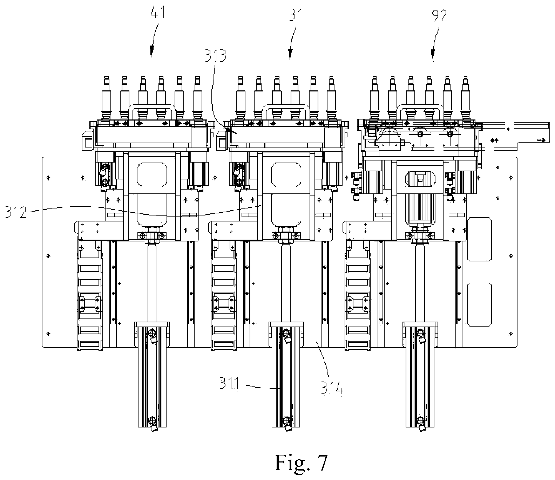

Referring to the first class axial worm carrying tray mechanism 31, as shown in Fig. 7 and Fig. 8, the second class axial worm carrying tray mechanism which also comprising a chassis and a roller carriage installed on the chassis, the roller carriage which comprising a set of leveled and juxtaposed electric roller, the roller carriage which comprising an input end and an output end in relation to the feeding direction of the set of electric roller;
referring to first class axial worm carrying tray mechanism 31, as shown in Fig. 7 and Fig. 8, identically, the second class axial worm carrying tray mechanism which further comprising a vertically arranged supporting plate, the second lifting cylinder is fixed onto the side wall of the supporting plate; the side wall of the supporting plate is provided with guide track, the chassis is provided with a sliding piece, the sliding piece couples with the guide track, the piston rod of the second lifting cylinder is vertically arranged and is fixed with the base of the chassis; when the second lifting cylinder is in zero position, the back end of the input end of the roller carriage in the second class axial worm carrying tray mechanism connects with the empty carrying tray second input track 32, and when the second lifting cylinder is extending, the front end of the input end of the roller carriage in the second class axial worm carrying tray mechanism connects with loaded tray second output track.

As shown in Fig. 3 and Fig. 7, the above described uninspected axial worm carrying tray mechanism 92, the first class axial worm carrying tray mechanism 31 and the second class axial worm carrying tray mechanism 41 are juxtapose placed.

As shown in Fig. 1 and Fig. 3, the third class axial worm carrying tray mechanism 50 and the fourth class axial worm carrying tray mechanism 60 are arranged to the inner side of third side wall, the third class axial worm carrying tray mechanism and the fourth class axial worm carrying tray mechanism are arranged respectively close to the loaded tray third output opening and loaded tray output opening on the third side wall. The third class axial worm carrying tray mechanism and the fourth class axial worm carrying tray mechanism are juxtapose placed. The loaded tray third output opening 104 and the loaded tray fourth output opening 105 on the third side wall 13 are provided with a pair shutter door 130.

As shown in Fig. 2, the loaded tray first output opening 102 on the second side wall 12 is provided with a first safety door 120, the first safety door which comprising a door panel 121, a lifting cylinder 122 and a pair of guide tracks 123; the lifting cylinder is fixed onto the inner side of the second side wall, the piston rod of the lifting cylinder is fixed connected with the top side of the door panel, the pair of guide tracks are vertically arranged to the inner side of the second side wall, and the two sides of the door panel couple with the pair of guide track. Like the first safety door, the loaded tray second output opening 103 on the second side wall 12 is provided with a second safety door, the second safety door which comprising a door panel, a lifting cylinder and a pair of guide tracks; the lifting cylinder is fixed onto the inner side of the second side wall, the piston rod of the lifting cylinder is fixed connected with the top side of the door panel, the pair of guide tracks are vertically arranged to the inner side of the second side wall, and the two sides of the door panel couple with the pair of guide track.

The working principle of the present invention is mainly reflected in the two following aspects:
First, input of uninspected axial worms and output of empty carrying tray. A loaded axial worm carrying tray arrives at the uninspected axial worm inspection mechanism 92 by uninspected axial worm input track 91, the uninspected axial worm carrying tray mechanism 92 receives the loaded carrying tray; the mechanical hand 20 picks up axial worm from the loaded carrying tray and transport the axial worm to the axial worm inspection device, after the axial inspection device completes inspecting the axial worm, the mechanical hand places the inspected axial worm by it's accuracy class in the first class axial worm carrying tray31, second class axial worm carrying tray 41, third class axial worm carrying tray 50 or fourth class axial worm carrying tray 60; when the loaded carrying tray becomes empty, the third lifting cylinder 921 drives the uninspected axial worm carrying tray mechanism 92 downward, once the uninspected axial worm carrying tray mechanism 92 connects with the empty carrying tray output track 93, the uninspected axial worm carrying tray mechanism 92 transfer the empty carrying tray onto the empty carrying tray track 93, then the empty carrying tray track transport the empty tray out of the three pin inspection machine.
Second, input of empty carrying tray and output of inspected axial worm. Empty carrying tray arrives at the first class axial worm carrying tray mechanism 31 by the empty carrying tray first input track 32, the first class axial worm carrying tray mechanism 31 receives the empty tray, the first lifting cylinder 311 drives the first class axial worm carrying tray mechanism 31 upward to connect with the loaded carrying tray first output track 33; the empty carrying tray is transport to the second class axial worm carrying tray mechanism 41 by the empty carrying tray input track 42, the second class axial worm carrying tray mechanism 41 receives the empty tray, the second lifting cylinder drives the second class axial worm carrying tray mechanism upward to connect with the loaded carrying tray second output track 43; the empty carrying tray passes through the loaded carrying tray third output track 104 and the loaded carrying tray fourth output track 105 on the third side wall 13, and is placed on the third class axial worm carrying tray mechanism 50 and the fourth class axial worm carrying tray mechanism 60. When the carrying tray on the first class axial worm carrying tray mechanism 31 is fully loaded, the first class axial worm carrying tray mechanism 31 transfers the loaded carrying tray to the loaded carrying tray first output track 33, and the loaded carrying tray first output track 33 transports the loaded carrying tray out of three pin inspection machine; when the carrying tray on the second class axial worm carrying tray mechanism 41 is fully loaded, the second class axial worm carrying tray mechanism 41 transfers the loaded carrying tray to loaded carrying tray second output track 43, and the loaded carrying tray second output track 43 transports the loaded carrying tray out of three pin inspection machine; when the carrying tray on the third class axial worm carrying tray mechanism 50 and the fourth class axial worm carrying tray mechanism 60 is fully loaded, the operator removes the carrying tray from the loaded carrying tray third output opening 104 and the loaded carrying tray fourth output opening 105.

## Claims

1. A three pin axial worm inspection machine comprising: a chassis (10), a mechanical hand (20), an axial worm inspection device, an input system for uninspected axial worms, a first class axial worms carrying system, a second class axial worms carrying system, a third class axial worms carrying tray mechanism (50) and a fourth class axial worms carrying tray mechanism (60);
wherein the axial worm inspection device is comprising a first axial worm inspection device (70) and a second axial worm inspection device (80);
wherein the input system of the uninspected axial worms is comprising an uninspected axial worms input track (91), an uninspected axial worms carrying tray mechanism (92), and an empty carrying tray carrying output track (93);
the first class axial worms carrying system is comprising a first class axial worms carrying tray mechanism (31), an empty carrying tray first input track (32), and a loaded carrying tray first output track (33); the second class axial worms carrying system comprising a second class axial worms carrying tray mechanism (41), an empty carrying tray second input track (42), a loaded tray second output track (43);
wherein the chassis (10) is in a square box structure; wherein the chassis is comprising a vertically arranged first side wall (11), a second side wall (12), a third side wall (13), and a fourth side wall (14); wherein the first side wall (11), the second wide wall (12), the third side wall (13), and the fourth side wall (14) form a square; wherein, the first side wall (11) is paralleled with the third side wall (13); the first side wall (11) is provided with a uninspected axial worms input opening (101), the second side wall (12) is provided with a loaded tray first output opening (102) and a loaded tray second output opening (103), the third side wall (13) is provided with a loaded tray third output opening (104) and a loaded tray fourth output opening (105), and the fourth side wall (14) is provided with an empty carrying tray output opening (106), an empty carrying tray first input opening (107), and an empty carrying tray second output opening (108);
wherein the mechanical hand (20) is arranged is the center of the square formed by the first, second, third, and fourth side wall (11, 12, 13, 14);
wherein the first axial worm inspection device (70) is arranged to the inner side of the first side wall (11);
wherein the uninspected axial worm carrying tray mechanism (92) is arranged to the inner side of the junction of the first and second side wall (11, 12), the uninspected axial worms input track (91) passes through the uninspected axial worms input opening to feed the uninspected axial worms carrying tray mechanism with trays loaded with uninspected axial worms; the empty carrying tray output track (93) is located below the uninspected axial worms input track; the uninspected axial worms carrying tray mechanism comprising a third lifting cylinder (921) for driving the uninspected axial worms carrying tray mechanism to lift and lower; when the third lifting cylinder (921) is extended, the uninspected axial worms carrying tray mechanism connects with the uninspected axial worms input track; when the lifting cylinder (921) is in zero position, the uninspected axial worms carrying tray mechanism connects with the empty carrying tray output track, and the output end of the empty carrying tray output track passes through empty carrying tray output opening on the fourth side wall (14);
wherein the first class axial worms carrying tray mechanism (31) is arranged to the inner side of the second side wall, wherein the first class axial worms carrying tray mechanism is provided with a first lifting cylinder (311) for driving the first class axial worms carrying tray mechanism (31) to lift and lower; when the first lifting cylinder (311) is in zero position, the first class axial worms carrying tray mechanism connects with the empty carrying tray first input track (32), the empty carrying tray first input track feeds the first class axial worm carrying tray mechanism with empty carrying trays and the input end of the empty carrying tray first input track is arranged at the empty carrying tray first input opening on the fourth side wall (14); when the first lifting cylinder (311) is extended, the first class axial worm carrying tray mechanism (31) connects with the loaded tray first output track (33), the loaded tray first output track (33) outputs the loaded tray on the first class axial worms carrying tray mechanism (31) from the three pins inspection machine, and the output end of the loaded tray first output track (33) passes through the loaded tray first output opening on the second side wall (12);
wherein the second class axial worm carrying tray mechanism (41) is arranged to the inner side of the second side wall (12), the second class axial worms carrying tray mechanism (41) is provided with a second lifting cylinder for driving the second class axial worms carrying tray mechanism (41) to lift and lower; when the second lifting cylinder is in zero position, the second class axial worms carrying tray mechanism (41) connects with the empty carrying tray second input track (42), the empty carrying tray second input track feeds the second class axial worm carrying tray mechanism (41) with empty carrying trays, the input end of the empty carrying tray second input track is arranged at the empty carrying tray second input opening on the fourth side wall (14); when the second lifting cylinder is extended, the second class axial worm carrying tray mechanism (41) connects with the loaded tray second output track (43), the loaded tray second output track (43) outputs the loaded tray on the second class axial worms carrying tray mechanism (41) from the three pins inspection machine, and the output end of the loaded tray second output track passes through the loaded tray second output opening on the second side wall (12);
wherein the uninspected axial worm carrying tray mechanism (92), the first class axial worm carrying tray mechanism (31) and the second class axial worm carrying tray mechanism (41) are juxtapose placed;
wherein, the third class axial worm carrying tray mechanism (50) and the fourth class axial worm carrying tray mechanism (60) are arranged to the inner side of third side wall (13), the third class axial worm carrying tray mechanism and the fourth class axial worm carrying tray mechanism are arranged respectively close to the loaded tray third output opening on the third side wall (13); and
wherein, the third class axial worm carrying tray mechanism and the fourth class axial worm carrying tray mechanism are juxtapose placed.

2. The three pin axial worm inspection machine as claimed in claim 1, wherein the uninspected axial worm carrying tray mechanism (92) comprises a chassis (922), a roller wheel carriage (923), a roller carriage (924) and an empty carrying tray discharging cylinder (925);
wherein, the roller carriage (924) is installed on the chassis (922), the roller carriage (924) comprises a set of leveled and juxtaposed electric rollers (9240) and the roller carriage (924) comprises an input end and an output end in relation to the feeding direction of the set of electric rollers (9240);
wherein, the roller wheel carriage (923) comprises two rows of leveled and juxtaposed roller wheels (9230), the two rows of roller wheels (9230) are provided with an input end and an output end in relation to the feeding direction of the roller wheels (9230); the roller wheel carriage (923) and roller carriage (924) are independent to each other, the feeding direction of the electrical roller (9240) is perpendicular to the feeding direction of the roller wheels (9230) and the two rows of roller wheels (9230) are arranged to the front of the input end and to the back of the output end respectively;
wherein, the input end of the roller wheel carriage (923) is hinged to the chassis (922), the empty carrying tray discharging cylinder (925) is fixed on the chassis (922), the empty carrying tray discharging cylinder (925) is arranged below the roller wheel carriage (923) and the roller carriage (924), the free end of the piston rod of the empty carrying tray discharging cylinder (925) is hinged to the center of the bottom of the roller wheel carriage (923);
wherein when the empty carrying tray discharging cylinder (925) is in zero position, the roller wheel carriage (923) is in leveled position and the top height of the two rows of the roller wheels (9230) is lower than the top height of the set of electrical rollers (9240);
wherein when the empty carrying tray discharging cylinder (925) is in extending positioning, the roller wheel carriage (923) turns in a certain angle and the roller wheel carriage (923) turns in a certain angle where the top height of the two rows of the roller wheels (9230) is higher than the top height of the set of electric rollers (9240);
wherein the uninspected axial worm carrying tray mechanism (92) further comprises a vertically arranged supporting plate (926) and the third lifting cylinder (921) is fixed onto the side wall of the supporting plate (926); wherein, the side wall of the supporting plate (926) is provided with a guide track, the chassis (922) is provided with a sliding piece, the sliding piece couples with the guide track and the piston rod of the third lifting cylinder (921) is vertically arranged and is fixed with the base of the chassis (922);
wherein, when the third lifting cylinder (921) is extended, the roller carriage (924) in the uninspected axial worm carrying tray mechanism connects with the uninspected axial worm input track (91), when the third lifting cylinder (921) is in zero position, the roller wheel carriage (923) turned by the certain angle in the uninspected axial worm carrying tray mechanism (92) connects with the empty carrying tray output track (93).

3. The three pin axial worm inspection machine as claimed in claim 1 or 2, wherein the first class axial worm carrying tray mechanism (31) comprises a chassis (312) and a roller carriage (313) installed on the chassis (312), the roller carriage comprises a set of leveled and juxtaposed electric rollers (3130) and the roller carriage (313) comprises an input end and an output end in relation to the feeding direction of the set of electric rollers (3130);
wherein the first class axial worm carrying tray mechanism (31) further comprises a vertically arranged supporting plate (314) and the first lifting cylinder (311) is fixed onto the side wall of the supporting plate; wherein the side wall of the supporting plate is provided with a guide track, the chassis (312) is provided with a sliding piece, the sliding piece couples with the guide track and the piston rod of the first lifting cylinder (311) is vertically arranged and is fixed with the base of the chassis (312);
wherein, when the first lifting cylinder (311) is in zero position, the back end of the input end of the roller carriage (313) in the first class axial worm carrying tray mechanism (31) connects with the empty carrying tray first input track (32), and when the first lifting cylinder (311) is extended, the front end of the input end of the roller carriage in the first class axial worm carrying tray mechanism (31) connects with loaded tray first output track (33).

4. The three pin axial worm inspection machine as claimed in one of the preceding claims, wherein the loaded tray first output opening (102) on the second side wall (12) is provided with a first safety door (120); the first safety door (120) comprises a door panel (121), a lifting cylinder (122) and a pair of guide tracks (123); the lifting cylinder (122) is fixed onto the inner side of the second side wall (12), the piston rod of the lifting cylinder is connected with the top side of the door panel (121), the pair of guide tracks (123) is vertically arranged to the inner side of the second side wall (12), and the two sides of the door panel (121) couple with the pair of guide tracks (123).

5. The three pin axial worm inspection machine as claimed in one of the preceding claims, wherein the second class axial worm carrying tray mechanism (41) comprises a chassis and a roller carriage installed on the chassis, wherein the roller carriage comprises a set of leveled and juxtaposed electric rollers, the roller carriage which comprising an input end and an output end in relation to the feeding direction of the set of electric rollers;
wherein, the second class axial worm carrying tray mechanism further comprises a vertically arranged supporting plate, the second lifting cylinder is fixed onto the side wall of the supporting plate; the side wall of the supporting plate is provided with guide track, the chassis is provided with a sliding piece, the sliding piece couples with the guide track and the piston rod of the second lifting cylinder is vertically arranged and is fixed with the base of the chassis;
wherein when the second lifting cylinder is in zero position, the back end of the input end of the roller carriage in the second class axial worm carrying tray mechanism (41) connects with the empty carrying tray second input track (32), and when the second lifting cylinder is extended, the front end of the input end of the roller carriage in the second class axial worm carrying tray mechanism (41) connects with loaded tray second output track.

6. The three pin axial worm inspection machine as claimed in one of the preceding claims, wherein the loaded tray second output opening (103) on the second side wall (12) is provided with a second safety door, the second safety door comprises a door panel, a lifting cylinder and a pair of guide tracks; the lifting cylinder is fixed onto the inner side of the second side wall (12), the piston rod of the lifting cylinder is fixed connected with the top side of the door panel, the pair of guide tracks are vertically arranged to the inner side of the second side wall (12), and the two sides of the door panel couple with the pair of guide track.

7. The three pin axial worm inspection machine as claimed in one of the preceding claims, wherein the loaded tray third output opening (104) and the loaded tray fourth output opening (105) on the third side wall (13) are provided with a pair shutter doors (130).

8. The three pin axial worm inspection machine as claimed in one of the preceding claims, wherein the first axial worm inspection device (70) comprises a pair of sensing heads (71) and a axial worm self-turning device (72); wherein the axial worm self-turning device (72) comprises a pair of juxtaposed turning rods (721) and a motor (722) for driving the pair of turning rods (721) to rotate synchronously, wherein the uninspected axial worms are placed on and in between the pair of turning rods (721); and the pair of sensing heads are placed to the two sides of the axial worm self-turning device (72).

9. The three pin axial worm inspection machine as claimed in one of the preceding claims, wherein the second axial worm inspection device (80) comprises a pair of fiber optic sensors (81) and an axial worm resting device (82); wherein the axial worm resting device comprises a base panel (821), a fixing piece (822), a first positioning piece (823), a supporting piece (824), a sliding piece (825), a second positioning piece (826), and a threaded fixing member (827); wherein the base panel (821) is provided with a sliding slot (820), the fixing piece (822) is fixed in the sliding slot (820), the fixing piece (822) is provided with a slot, the first positioning piece (823) snaps into the slot, the cross cut section of the supporting piece (824) is V shaped, the supporting piece (824) is fixed in the sliding slot (820), the supporting piece (824) is used for supporting the uninspected axial worms, the sliding piece (825) is provided with a long sliding hole, the threaded fixing member (827) passes through the sliding hole then connects with the base panel, the threaded fixing member (827) fixes the sliding piece (825) in the sliding slot (820), the second positioning piece (826) is fixed on the sliding piece (825); wherein the first positioning piece (823) and the second positioning piece (826) are arranged opposite to each other and to the two sides of the supporting piece (824); and the pair of fiber optic sensors (81) are arranged to the two sides of the axial worm resting device.

## Patentansprüche

1. Eine Drei-Bolzen-Axialschnecken-Prüfmaschine mit: einem Gehäuse (10), einer mechanischen Hand (20), einer Axialschnecken-Prüfvorrichtung, einem Eingabesystem für ungeprüfte Axialschnecken, einem Erste-Klasse-Axialschnecken-Trägersystem, einem Zweite-Klasse-Axialschnecken-Trägersystem; einem Dritte-Klasse-Axialschnecken-Trägerablagemechanismus (50) und einem Vierte-Klasse-Axialschnecken Trägerablagemechanismus (60);
wobei die Prüfvorrichtung für Axialschnecken eine erste Prüfvorrichtung (70) für Axialschnecken und eine zweite Prüfvorrichtung (80) für Axialschnecken umfasst;
wobei das Eingabesystem der ungeprüften Axialschnecken einen Eingabeweg (91) für ungeprüfte Axialschnecken, einen Trägerablagemechanismus (92) für ungeprüfte Axialschnecken und einen leere Trägerablagen befördernden Ausgabeweg (93) umfasst;
wobei das Erste-Klasse-Axialschnecken-Trägersystem einen Erste-Klasse-Axialschnecken-Trägerablagemechanismus (31), einen Eingabeweg (32) für leere Trägerablagen und einen ersten Ausgabeweg (33) für beladene Trägerablagen umfasst;
wobei das Zweite-Klasse-Axialschnecken-Trägersystem einen Zweite-Klasse-Axialschnecken-Trägerablagemechanismus (41), einen zweiten Eingabeweg (42) für leere Trägerablagen und einen zweiten Ausgabeweg (43) für beladene Trägerablagen umfasst;
wobei das Gehäuse (10) einen quadratischen Kastenaufbau aufweist; wobei das Gehäuse eine vertikal angeordnete erste Seitenwand (11), eine zweite Seitenwand (12), eine dritte Seitenwand (13) und eine vierte Seitenwand (14) umfasst und wobei die erste Seitenwand (11), die zweite Seitenwand (12), die dritte Seitenwand (13) und die vierte Seitenwand (14) ein Quadrat bilden; wobei die erste Seitenwand (11) parallel zur dritten Seitenwand (13) steht; wobei die erste Seitenwand (11) mit einer Eingabeöffnung (101) für ungeprüfte Axialschnecken versehen ist, die zweite Seitenwand (12) mit einer ersten Ausgabeöffnung (102) für beladene Ablagen und einer zweiten Ausgabeöffnung (103) für beladene Ablagen versehen ist, die dritte Seitenwand (13) mit einer dritten Ausgabeöffnung (104) für beladene Ablagen und einer vierten Ausgabeöffnung (105) für beladene Ablagen versehen ist und die vierte Seitenwand (14) mit einer Ausgabeöffnung (106) für leere Trägerablagen, einer ersten Eingabeöffnung (107) für leeren Trägerablagen und einer zweiten Ausgabeöffnung (108) für leere Trägerablagen versehen ist;
wobei die mechanische Hand (20) in der Mitte des Quadrats, das aus der ersten, zweiten, dritten und vierten Seitenwand (11, 12, 13, 14) gebildet wird, angeordnet ist;
wobei die erste Prüfvorrichtung (70) für Axialschnecken an der Innenseite der ersten Seitenwand (11) angeordnet ist;
wobei der Trägerablagemechanismus (92) für ungeprüfte Axialschnecken auf der Innenseite der Verbindung der ersten und zweiten Seitenwand (11, 12) angeordnet ist und der Eingabeweg (91) für ungeprüfte Axialschnecken durch die Eingabeöffnung für ungeprüfte Axialschnecken verläuft, um dem Trägerablagemechanismus (92) für ungeprüfte Axialschnecken Ablagen zuzuführen, die mit ungeprüften Axialschnecken beladen sind; wobei sich der eine leere Trägerablage befördernde Ausgabeweg (93) unter dem Eingabeweg für ungeprüfte Axialschnecken befindet; wobei der Trägerablagemechanismus (92) für ungeprüfte Axialschnecken einen dritten Hubzylinder (921) zum Antreiben des Trägerlablagemechanismus (92) für ungeprüfte Axialschnecken um sich anzuheben und abzusenken umfasst; wobei, wenn der dritte Hubzylinder (921) ausgefahren ist, sich der Trägerablagemechanismus (92) für ungeprüfte Axialschnecken mit dem Eingabeweg für ungeprüfte Axialschnecken verbindet; wobei sich der Trägerablagemechanismus (92) für ungeprüfte Axialschnecken mit dem leere Trägerablage befördernden Ausgabeweg (93) verbindet, wenn sich der Hubzylinder in der Nullposition befindet und das Ausgabeende des leere Trägerablage befördernden Ausgabewegs (93) durch die leere Trägerablage befördernde Ausgabeöffnung auf der vierten Seitenwand (14) verläuft;
wobei der Erste-Klasse-Axialschnecken-Trägerablagemechanismus (31) an der Innenseite der zweiten Seitenwand (12) angeordnet ist, wobei der Erste-Klasse-Axialschnecken Trägerablagemechanismus (31) mit einem ersten Hubzylinder (311) versehen ist, um den Erste-Klasse-Axialschnecken-Trägerablagemechanismus (31) anzutreiben, sich anzuheben und abzusenken; wobei wenn sich der erste Hubzylinder in Nullposition befindet, sich der Erste-Klasse-Axialschnecken-Trägerablagemechanismus (31) mit dem Eingabeweg (32) für leere Trägerablagen verbindet, der Eingabeweg (32) für leere Trägerablagen dem Erste-Klasse-Axialschnecken-Trägerablagemechanismus (31) leere Trägerablagen zuführt und das Eingabeende des leere Trägerablagen befördernden ersten Eingabewegs an der ersten Eingabeöffnung für leere Trägerablagen auf der vierten Seitenwand (14) angeordnet ist; wobei, wenn der erste Hubzylinder (311) ausgefahren ist, sich der Erste-Klasse-Axialschnecken-Trägerablagemechanismus (31) mit dem ersten Ausgabeweg (33) für beladene Ablagen verbindet, der erste Ausgabeweg (33) für beladene Ablagen die beladene Ablage auf dem Erste-Klasse-Axialschnecken-Trägermechanismus (31) von der Drei-Bolzen-Prüfmaschine ausgibt und das Ausgabeende des Ausgabewegs (33) für beladene Ablagen durch die erste Ausgabeöffnung auf der zweiten Seitenwand (12) verläuft;
wobei der Zweite-Klasse-Axialschnecken-Trägerablagemechanismus (41) an der Innenseite der zweiten Seitenwand (12) angeordnet ist, wobei der Zweite-Klasse-Axialschnecken-Trägerablagemechanismus (41) mit einem zweiten Hubzylinder versehen ist, um den Zweite-Klasse-Axialschnecken-Trägerablagemechanismus (41) anzutreiben, sich anzuheben und abzusenken; wobei, wenn sich der zweite Hubzylinder in Nullposition befindet, sich der Zweite-Klasse-Axialschnecken-Trägerablagemechanismus (41) mit dem zweiten Eingabeweg (42) für leere Trägerablagen verbindet, der zweite Eingabeweg (42) für leere Trägerablagen dem Zweite-Klasse-Axialschnecken-Trägerablagemechanismus (41) leere Trägerablagen zuführt und das Eingabeende des leere Trägerablagen befördernden zweiten Eingabewegs an der zweiten Eingabeöffnung für leere Trägerablagen auf der vierten Seitenwand (14) angeordnet ist; wobei, wenn der zweite Hubzylinder ausgefahren ist, sich der Zweite-Klasse-Axialschnecken-Trägerablagemechanismus (41) mit dem zweiten Ausgabeweg (43) für beladenen Ablagen verbindet und der zweiter Ausgabeweg (43) für beladene Ablagen die beladene Ablage auf dem Zweite-Klasse-Axialschnecken-Trägerablagemechanismus (41) von der Drei-Bolzen-Prüfmaschine ausgibt und das Ausgabeende des zweiten Ausgabewegs für beladene Ablagen durch die zweite Ausgabeöffnung auf der zweiten Seitenwand (12) verläuft;
wobei der ungeprüfte Axialschnecken-Trägerablagemechanismus (92), der Erste-Klasse-Axialschnecken-Trägerablagemechanismus (31) und der Zweite-Klasse-Axialschnecken-Trägerablagemechanismus (41) nebeneinander angeordnet sind;
wobei der Dritte-Klasse-Axialschnecken-Trägerablagemechanismus (50) und der Vierte-Klasse-Axialschnecken-Trägerablagemechanismus (60) an der Innenseite der dritten Seitenwand (13) angeordnet sind und der Dritte-Klasse-Axialschnecken-Trägerablagemechanismus (50) und der Vierte-Klasse-Axialschnecken-Trägerablagemechanismus (60) jeweils dicht an der beladenen Ablage mit dritter Ausgabeöffnung an der dritten Seitenwand (13) angeordnet sind; und
wobei der Dritte-Klasse-Axialschnecken-Trägerablagemechanismus (50) und der Vierte-Klasse-Axialschnecken-Trägerablagemechanismus (60) nebeneinander angeordnet sind.

2. Die Drei-Bolzen-Axialschnecken-Prüfmaschine gemäß Anspruch 1, wobei der Trägerablagemechanismus (92) für ungeprüfte Axialschnecken ein Gehäuse (922), ein Laufrollenradgestell (923), ein Laufrollengestell (924) und einen Ausstoßzylinder (925) für leere Trägerablagen umfasst;
wobei das Laufrollengestell (924) auf dem Gehäuse (922) installiert ist, wobei das Laufrollengestell (924) einen Satz waagerecht ausgerichtete und nebeneinanderstehende elektrische Laufrollen (9240) umfasst und das Laufrollengestell (924) ein Eingabeende und ein Ausgabeende bezüglich der Zuführrichtung des Satzes elektrischer Laufrollen (9240) umfasst;
wobei das Laufrollenradgestell (923) zwei Reihen waagerecht ausgerichtete und nebeneinanderstehende Laufrollenräder (9230) umfasst und die beiden Reihen Laufrollenräder (9230) mit einem Eingabeende und einem Ausgabeende bezüglich der Zuführrichtung der Laufrollenräder (9230) ausgestattet ist; wobei das Laufrollenradgestell (923) und das Laufrollengestell (924) voneinander unabhängig sind, die Zuführrichtung der elektrischen Laufrollen (9240) senkrecht zur Zuführrichtung der Laufrollenräder (9230) ist und die beiden Reihen Laufrollenräder (9230) jeweils an der Vorderseite des Eingabeendes und an der Rückseite des Ausgabeendes angeordnet sind;
wobei das Eingabeende des Laufrollenradgestells (923) in das Gehäuse (922) eingehängt ist, der Ausstoßzylinder (925) für leere Trägerablagen auf dem Gehäuse (922) befestigt ist, der Ausstoßzylinder (925) für leere Trägerablagen unter dem Laufrollenradgestell (923) und dem Laufrollengestell (924) angeordnet ist, das freie Ende der Kolbenstange des Ausstoßzylinders (925) für leere Trägerablagen in die Mitte der Unterseite des Laufrollenradgestells (923) eingehängt ist;
wobei, wenn sich der Ausstoßzylinder (925) für leere Trägerablagen in Nullposition befindet, sich das Laufrollenradgestell (924) in waagerechter Position befindet und die Oberhöhe der beiden Reihen der Laufrollenräder (9230) niedriger ist als die Oberhöhe des Satzes elektrischer Laufrollen (9240);
wobei, wenn sich der Ausstoßzylinder (925) für leere Trägerablagen in einer ausgefahrenen Position befindet, sich das Laufrollenradgestell (924) in einem gewissen Winkel drehen und das Laufrollenradgestell (923) sich in einem gewissen Winkel dreht, so dass die Oberhöhe der beiden Reihen Laufrollenräder (9230) höher ist als die Oberhöhe des Satzes elektrischer Laufrollen (9240);
wobei der Trägerablagemechanismus (92) für ungeprüfte Axialschnecken ferner eine vertikal angeordnete Trägerplatte (926) umfasst, der dritte Hubzylinder (921) an der Seitenwand der Trägerplatte (926) befestigt ist; wobei die Seitenwand der Trägerplatte (926) mit einer Führungsbahn und das Gehäuse (922) mit einem Gleitstück ausgestattet ist, das Gleitstück mit der Führungsbahn gekoppelt ist und die Kolbenstange des dritten Hubzylinders (921) vertikal an der Basis des Gehäuses (922) angeordnet und an ihm befestigt ist;
wobei sich, wenn der dritte Hubzylinder (921) ausgefahren ist, das Laufrollengestell (924) im Trägerablagemechanismus (92) für ungeprüfte Axialschnecken mit dem Eingabeweg (91) für ungeprüfte Axialschnecken verbindet und wenn sich der dritte Hubzylinder (921) in Nullposition befindet, das um einen bestimmten Winkel gedrehte Laufrollenradgestell (923) in dem Trägerablagemechanismus (92) für ungeprüfte Axialschnecken mit dem leere Trägerablage befördernden Ausgabeweg (93) verbindet.

3. Die Drei-Bolzen-Axialschnecken-Prüfmaschine gemäß Anspruch 1 oder 2, wobei der Erste-Klasse-Axialschnecken-Trägerablagemechanismus (31) ein Gehäuse (312) und ein Laufrollengestell (313), das auf dem Gehäuse (312) installiert ist, umfasst, wobei das Laufrollengestell (313) einen Satz waagerecht ausgerichtete und nebeneinanderstehende elektrische Laufrollen (3130) umfasst und das Laufrollengestell (313) ein Eingabeende und ein Ausgabeende bezüglich der Zuführrichtung des Satzes elektrischer Laufrollen (3130) umfasst;
wobei der Erste-Klasse-Axialschnecken-Trägerablagemechanismus (31) ferner eine vertikal angeordnete Trägerplatte (314) umfasst und der erste Hubzylinder (311) auf der Seitenwand der Trägerplatte (314) befestigt ist; wobei die Seitenwand der Trägerplatte (314) mit einer Führungsbahn, und das Gehäuse (312) mit einem Gleitstück ausgestattet ist, und das Gleitstück mit der Führungsbahn gekoppelt ist und die Kolbenstange des ersten Hubzylinders (311) vertikal an der Basis des Gehäuses (312) angeordnet und an ihm befestigt ist;
wobei, wenn sich der erste Hubzylinder (311) in Nullposition befindet, sich das hintere Ende des Eingabeendes des Laufrollengestells (313) im Erste-Klasse-Axialschnecken-Trägerablagemechanismus (31) mit dem Eingabeweg (32) für der leere Trägerablagen verbindet und wenn der Hubzylinder (311) ausgefahren ist, das vordere Ende des Eingabeendes des Laufrollengestells (313) im Erste-Klasse-Axialschnecken-Trägerablagesystem (31) mit dem ersten Ausgabeweg (33) für beladende Ablagen verbindet.

4. Die Drei-Bolzen-Axialschnecken-Prüfmaschine gemäß einem der vorangehenden Ansprüche, wobei die erste Ausgabeöffnung (102) für beladene Ablagen in der zweiten Seitenwand (12) mit einer ersten Sicherheitstür (120) ausgestattet ist; die erste Sicherheitstür (120) eine Türplatte (121), einen Hubzylinder (122) und ein Paar Führungsbahnen (123) umfasst; der Hubzylinder (122) auf der Innenseite der zweiten Seitenwand (12) befestigt ist, die Kolbenstange des Hubzylinders (122) mit der Oberseite der Türplatte (121) verbunden ist, das Paar Führungsbahnen (123) vertikal an der Innenseite der zweiten Seitenwand (12) angeordnet ist und die beiden Seiten der Türplatte (121) mit dem Paar Führungsbahnen (123) verbunden sind.

5. Die Drei-Bolzen-Axialschnecken-Prüfmaschine gemäß einem der vorangehenden Ansprüche, wobei der Zweite-Klasse-Axialschnecken-Trägerablagemechanismus (41) ein Gehäuse und ein Laufrollengestell, das auf dem Gehäuse installiert ist, umfasst, wobei das Laufrollengestell einen Satz waagerecht ausgerichtete und nebeneinanderstehende elektrische Laufrollen umfasst und das Laufrollengestell ein Eingabeende und ein Ausgabeende bezüglich der Zuführrichtung des Satzes elektrischer Laufrollen umfasst;
wobei der Zweite-Klasse-Axialschnecken-Trägerablagemechanismus (41) ferner eine vertikal angeordnete Trägerplatte umfasst, der zweite Hubzylinder auf der Seitenwand der Trägerplatte befestigt ist; die Seitenwand der Trägerplatte mit einer Führungsbahn, das Gehäuse mit einem Gleitstück ausgestattet ist, das Gleitstück mit der Führungsbahn gekoppelt ist und die Kolbenstange des zweiten Hubzylinders vertikal an der Basis des Gehäuses angeordnet und an ihm befestigt ist;
wobei, wenn sich der zweite Hubzylinder in Nullposition befindet, sich das hintere Ende des Eingabeendes des Laufrollengestells im Zweite-Klasse-Axialschnecken-Trägerablagemechanismus (41) mit dem zweiten Eingabeweg (32) für leere Trägerablagen verbindet und wenn der zweite Hubzylinder ausgefahren ist, sich das vordere Ende des Eingabeendes des Laufrollengestells im Zweite-Klasse-Axialschnecken-Trägerablagemechanismus (41) mit dem zweiten Ausgabeweg für beladene Ablagen verbindet.

6. Die Drei-Bolzen-Axialschnecken-Prüfmaschine gemäß einem der vorangehenden Ansprüche, wobei die zweite Ausgabeöffnung (103) für beladene Ablagen auf der zweiten Seitenwand (12) mit einer zweiten Sicherheitstür ausgestattet ist, die zweite Sicherheitstür (120) eine Türplatte, einen Hubzylinder und ein Paar Führungsbahnen umfasst; wobei der Hubzylinder auf der Innenseite der zweiten Seitenwand (12) befestigt ist und die Kolbenstange des Hubzylinders mit der Oberseite der Türplatte verbunden ist, das Paar Führungsbahnen vertikal an der Innenseite der zweiten Seitenwand (12) angeordnet ist und die beiden Seiten der Türplatte mit dem Paar Führungsbahnen verbunden sind.

7. Die Drei-Bolzen-Axialschnecken-Prüfmaschine gemäß einem der vorangehenden Ansprüche, wobei die dritte Ausgabeöffnung (104) für beladene Ablagen und die vierte Ausgabeöffnung (105) mit beladener Ablage auf der dritten Seitenwand (13) mit einem Paar Klappentüren (130) ausgestattet sind.

8. Die Drei-Bolzen-Axialschnecken-Prüfmaschine gemäß einem der vorangehenden Ansprüche, wobei die erste Prüfvorrichtung für Axialschnecken (70) ein Paar Messköpfe (71) und eine Selbstdrehvorrichtung (72) für Axialschnecken umfasst; wobei die Selbstdrehvorrichtung (72) für Axialschnecken ein Paar nebeneinanderstehende Drehstangen (721) und einen Motor (722) zum Antreiben des Paars Drehstangen (721), sich synchron zu drehen, umfasst, wobei sich die ungeprüften Axialschnecken auf oder zwischen den Paar Drehstangen (721) befinden; und wobei das Paar Messköpfe (71) auf den beiden Seiten der Selbstdrehvorrichtung (72) für Axialschnecken angeordnet ist.

9. Die Drei-Bolzen-Axialschnecken-Prüfmaschine gemäß einem der vorangehenden Ansprüche, wobei die zweite Prüfvorrichtung (80) für Axialschnecken ein Paar Faseroptiksensoren (81) und eine Ruhevorrichtung (82) für Axialschnecken umfasst; wobei die Ruhevorrichtung (82) für Axialschnecken eine Basisplatte (821), ein Befestigungsstück (822), ein erstes Positionierstück (823), ein Trägerstück (824), ein Gleitstück (825), ein zweites Positionierstück (826) und ein Gewindebefestigungsteil (827) umfasst; wobei die Basisplatte (821) einen Gleitschlitz (820) aufweist, das Befestigungsstück (822) in dem Gleitschlitz (820) befestigt ist, das Befestigungsstück (822) einen Schlitz aufweist, das erste Positionierstück (823) in den Schlitz einrastet, der Querschnitt des Trägerstücks (824) V-förmig ist, das Trägerstück (824) in dem Gleitschlitz (820) befestigt ist, das Trägerstück (824) verwendet wird, um die ungeprüften Axialschnecken zu stützen, wobei das Gleitstück (825) ein langes Gleitloch aufweist, das Gewindebefestigungsteil (827) durch das Gleitloch durchtritt und dann mit der Basisplatte (821) verbunden ist, das Gewindebefestigungsteil (827) das Gleitstück (825) in dem Gleitschlitz (820) befestigt, das zweite Positionierstück (826) auf dem Gleitstück (825) befestigt ist; wobei das erste Positionierstück (823) und das zweite Positionierstück (826) einander gegenüberliegend und an den beiden Seiten des Trägerstücks (824) angeordnet sind; und wobei das Paar der Faseroptiksensoren (81) an den beiden Seiten der Ruhevorrichtung (82) für Axialschnecken angeordnet sind.

## Revendications

1. Machine d'inspection de vis sans fin axiale à trois broches qui comprend : un châssis (10), une main mécanique (20), un dispositif d'inspection de vis sans fin axiale, un système d'admission de vis sans fin axiales non inspectées, un système de transport de vis sans fin axiales de première classe, un système de transport de vis sans fin axiales de deuxième classe, un mécanisme de plateau de transport de vis sans fin axiales de troisième classe (50) et un mécanisme de plateau de transport de vis sans fin axiales de quatrième classe (60) ;
dans laquelle le dispositif d'inspection de vis sans fin axiale comprend un dispositif d'inspection de première vis sans fin axiale (70) et un dispositif d'inspection de seconde vis sans fin axiale (80) ;
dans laquelle le système d'admission de vis sans fin axiales non inspectées comprend une voie d'admission de vis sans fin axiales non inspectées (91), un mécanisme de plateau de transport de vis sans fin axiales non inspectées (92) et une voie d'évacuation transportant le plateau de transport vide (93) ;
le système de transport de vis sans fin axiales de première classe comprend un mécanisme de plateau de transport de vis sans fin axiales de première classe (31), une première voie d'admission de plateau de transport vide (32) et une première voie d'admission de plateau chargé (33) ; le système de transport de vis sans fin axiales de seconde classe comprend un mécanisme de plateau de transport de vis sans fin axiales de seconde classe (41), une seconde voie d'admission de plateau de transport vide (42), une seconde voie d'évacuation de plateau chargé (43) ;
dans laquelle le châssis (10) est dans une structure de boîte carrée ; dans laquelle le châssis comprend une première paroi latérale (11) agencée verticalement, une seconde paroi latérale (12), une troisième paroi latérale (13), et une quatrième paroi latérale (14), la première paroi latérale (11), la seconde paroi latérale (12), la troisième paroi latérale (13), et la quatrième paroi latérale (14) formont un carré ; dans laquelle le premier côté est parallèle à la troisième paroi latérale (13); la première paroi latérale (11) est pourvue d'une ouverture d'admission de vis sans fin axiales non inspectées (101), la seconde paroi latérale (12) est pourvue d'une première ouverture d'évacuation de plateau chargé (102) et d'une seconde ouverture d'évacuation de plateau chargé (103), la troisième paroi latérale (13) est pourvue d'une troisième ouverture d'évacuation de plateau chargé (104) et d'une quatrième ouverture d'évacuation de plateau chargé (105) et la quatrième paroi latérale (14) est pourvue d'une ouverture d'évacuation de plateau de transport vide (106), d'une première ouverture d'admission (107) de plateau de transport vide et d'une seconde ouverture d'évacuation (108) de plateau de transport vide;
dans laquelle la main mécanique (20) est agencée au centre du carré formé par la première, seconde, troisième et quatrième paroi latérale(11, 12, 13, 14);
dans laquelle le dispositif d'inspection de première vis sans fin axiale (70) est agencé vers le côté intérieur de la première paroi latérale (11);
dans laquelle le mécanisme de plateau de transport de vis sans fin axiale non inspectée (92) est agencé vers le côté intérieur de la jonction de la première et de la seconde paroi latérale (11, 12), la voie d'admission de vis sans fin axiales non inspectées (91) traverse l'ouverture d'admission de vis sans fin axiales non inspectées pour alimenter le mécanisme de plateau de transport de vis sans fin axiales non inspectées avec des plateaux chargés avec des vis sans fin axiales non inspectées, la voie d'évacuation de plateau de transport vide (93) est positionnée en dessous de la voie d'admission de vis sans fin axiales non inspectées, le mécanisme de plateau de transport de vis sans fin axiales non inspectées comprend un troisième cylindre de levage (921) pour entraîner le mécanisme de plateau de transport de vis sans fin axiales non inspectées en montée et en descente lorsque un troisième cylindre de levage (921) est en extension, le mécanisme de plateau de transport de vis sans fin axiales non inspectées est connecté à la voie d'admission de vis sans fin axiales non inspectées et lorsque le cylindre de levage (921) est dans la position nulle, le mécanisme de plateau de transport de vis sans fin axiales non inspectées est connecté à la voie d'évacuation de plateau de transport vide et l'extrémité d'évacuation de la voie d'évacuation de plateau de transport vide traverse l'ouverture d'évacuation de plateau de transport vide sur la quatrième paroi latérale (14);
dans laquelle le mécanisme de plateau de transport de vis sans fin axiales de première classe (31) est agencé vers le côté intérieur de la seconde paroi latérale (12), le mécanisme de plateau de transport de vis sans fin axiales de première classe (31) est pourvu un premier cylindre de levage (311) pour entraîner le mécanisme de plateau de transport de vis sans fin axiales de première classe (31) en montée et en descente et lorsque le premier cylindre de levage est dans la position nulle, le mécanisme de plateau de transport de vis sans fin axiales de première classe (31) est connecté avec la première voie d'admission de plateau de transport vide (32), la première voie d'admission de plateau de transport vide alimente le mécanisme de plateau de transport de vis sans fin axiale de première classe (31) avec les plateaux de transport vides et l'extrémité d'admission de la première voie d'admission de plateau de transport vide est agencée au niveau de la première ouverture d'admission de plateau de transport vide sur la quatrième paroi latérale (14) et lorsque le premier cylindre de levage (311) est en extension, le mécanisme de plateau de transport de vis sans fin axiale de première classe (31) est connecté avec la première voie d'admission de plateau chargé (33), la première voie d'admission de plateau chargé (33) évacue le plateau chargé sur le mécanisme de plateau de transport de vis sans fin axiales de première classe (31) à partir de la machine d'inspection à trois broches et l'extrémité d'évacuation de la première voie d'admission de plateau chargé (33) traverse la première ouverture d'évacuation de plateau chargé sur la seconde paroi latérale (12) ;
dans laquelle le mécanisme de plateau de transport de vis sans fin axiale de seconde classe (41) est agencé vers le côté intérieur de la seconde paroi latérale (12), le mécanisme de plateau de transport de vis sans fin axiales de seconde classe (41) est pourvu un second cylindre de levage pour entraîner le mécanisme de plateau de transport de vis sans fin axiales de seconde classe (41) en montée et en descente et lorsque le second cylindre de levage est dans la position nulle, le mécanisme de plateau de transport de vis sans fin axiales de seconde classe (41) est connecté avec la seconde voie d'admission de plateau de transport vide (42), la seconde voie d'admission de plateau de transport vide (42) alimente le mécanisme de plateau de transport de vis sans fin axiale de seconde classe (41) avec des plateaux de transport vides, l'extrémité d'admission de la seconde voie d'admission de plateau de transport vide (42) est agencée au niveau de la seconde ouverture d'admission de plateau de transport vide (42) sur la quatrième paroi latérale (14) et lorsque le second cylindre de levage est en extension, le mécanisme de plateau de transport de vis sans fin axiale de seconde classe (41) est connecté avec la seconde voie d'évacuation de plateau chargé (43), la seconde voie d'évacuation de plateau chargé (43) évacue le plateau chargé sur le mécanisme de plateau de transport de vis sans fin axiales de seconde classe (41) à partir de la machine d'inspection à trois broches et l'extrémité d'évacuation de la seconde voie d'évacuation de plateau chargé (43) traverse la seconde ouverture d'évacuation de plateau chargé (43) sur la seconde paroi latérale (12) ;
dans laquelle le mécanisme de plateau de transport de vis sans fin axiale non inspectée (92), le mécanisme de plateau de transport de vis sans fin axiale de première classe (31) et le mécanisme de plateau de transport de vis sans fin axiale de seconde classe (41) sont placés de façon juxtaposée ;
dans laquelle le mécanisme de plateau de transport de vis sans fin axiale de troisième classe (50) et le mécanisme de plateau de transport de vis sans fin axiale de quatrième classe (60) sont agencés vers le côté intérieur de la troisième paroi latérale (13), le mécanisme de plateau de transport de vis sans fin axiale de troisième classe et le mécanisme de plateau de transport de vis sans fin axiale de quatrième classe sont agencés respectivement à proximité de la troisième ouverture d'évacuation de plateau chargé sur la troisième paroi latérale (13); et
dans laquelle le mécanisme de plateau de transport de vis sans fin axiale de troisième classe et le mécanisme de plateau de transport de vis sans fin axiale de quatrième classe sont placés de façon juxtaposée.

2. Machine d'inspection de vis sans fin axiale à trois broches selon la revendication 1, dans laquelle le mécanisme de plateau de transport de vis sans fin axiale non inspectée (92) comprend un châssis (922), un chariot à roue à galet (923), un chariot à galet (924) et un cylindre déchargeant un plateau de transport vide (925) ;
dans laquelle le chariot à galet (924) est installé sur le châssis, le chariot à galet (924) comprenant un jeu de galets électriques (9240) nivelé et juxtaposé, le chariot à galet (924) comprenant une extrémité d'admission et une extrémité d'évacuation par rapport à la direction d'alimentation du jeu de galets électriques (9240);
dans laquelle le chariot à roue à galet (923) comprend deux rangées de roues à galet (9230) nivelé et juxtaposé, les deux rangées de roues à galet (9230) étant pourvues d'une extrémité d'admission et d'une extrémité d'évacuation par rapport à la direction d'alimentation des roues à galet (9230); le chariot à roue à galet (923) et le chariot à galet (924) sont indépendants l'un de l'autre, la direction d'alimentation du galets électriques (9240) est perpendiculaire à la direction d'alimentation des roues à galet (9230), les deux rangées de roues à galet (9230) sont agencées vers l'avant de l'extrémité d'admission et vers l'arrière de l'extrémité d'évacuation respectivement ;
dans laquelle l'extrémité d'admission du chariot à roue à galet (923) est articulée au châssis (922), le cylindre déchargeant (925) un plateau de transport vide est fixé sur le châssis (922), le cylindre déchargeant (925) un plateau de transport vide est agencé en dessous du chariot à roue à galet (923) et du chariot à galet (924), l'extrémité libre de la tige de piston du cylindre déchargeant (925) un plateau de transport vide est articulée au niveau du centre du fond du chariot à roue à galet (923) ;
dans laquelle lorsque le cylindre déchargeant (925) un plateau de transport vide est dans la position nulle, le chariot à roue à galet (923) est dans la position nivelée et la partie supérieure des deux rangées des roues à galet est inférieure à la partie supérieure du jeu de galets électriques (9240) ;
dans laquelle, lorsque le cylindre déchargeant (925) un plateau de transport vide est dans la position en extension, le chariot à roue à galet (923) tourne à un certain angle et le chariot à roue à galet (923) tourne à un certain angle là où la partie supérieure des deux rangées des roues à galet (9230) est supérieure à la partie supérieure du jeu de galets électriques (9240);
dans laquelle le mécanisme de plateau de transport de vis sans fin axiale non inspectée (92) comprend en outre une plaque de support (926) agencée verticalement, le troisième cylindre de levage (921) est fixé sur la paroi latérale de la plaque de support (926); dans laquelle la paroi latérale de la plaque de support (926) est pourvue d'une voie de guidage, le châssis (922) est pourvu d'une pièce coulissante, la pièce coulissante s'accouple avec la voie de guidage et la tige de piston du troisième cylindre de levage (921) est agencée verticalement et est fixée avec la base du châssis (922);
dans laquelle lorsque le troisième cylindre de levage (921) est en extension, le chariot à galet (924) dans le mécanisme de plateau de transport de vis sans fin axiale non inspectée (92) est connecté avec la voie d'admission de vis sans fin axiale non inspectée (91) et lorsque le troisième cylindre de levage (921) est dans la position nulle, le chariot à roue à galet (923) tourné selon un certain angle dans le mécanisme de plateau de transport de vis (92) sans fin axiale non inspectée (923) est connecté avec la voie d'évacuation de plateau de transport vide (93).

3. Machine d'inspection de vis sans fin axiale à trois broches selon la revendication 1 ou 2, dans laquelle le mécanisme de plateau de transport de vis sans fin axiale de première classe (31) comprend un châssis (312) et un chariot à galet (313) installé sur le châssis (312), le chariot à galet comprend un jeu de galets électriques (3130) nivelé et juxtaposé, le chariot à galet (313) comprend une extrémité d'admission et une extrémité d'évacuation par rapport à la direction d'alimentation du jeu de galets électriques (3130);
dans laquelle le mécanisme de plateau de transport de vis sans fin axiale de première classe (31) comprend en outre une plaque de support (314) agencée verticalement, le premier cylindre de levage (311) est fixé sur la paroi latérale (314) de la plaque de support ; dans laquelle la paroi latérale de la plaque de support (314) est pourvue de la voie de guidage, le châssis (312) est pourvu d'une pièce coulissante, la pièce coulissante s'accouple avec la voie de guidage, la tige de piston du premier cylindre de levage (311) est agencée verticalement et est fixée avec la base du châssis (312);
dans laquelle lorsque le premier cylindre de levage (311) est dans la position nulle, l'extrémité arrière de l'extrémité d'admission du chariot à galet (313) dans le mécanisme de plateau de transport de vis sans fin axiale de première classe (31) est connectée avec la première voie d'admission de plateau de transport vide (32) et lorsque le premier cylindre de levage (311) est en extension, l'extrémité frontale de l'extrémité d'admission du chariot à galet dans le mécanisme de plateau de transport de vis sans fin axiale de première classe (31) est connectée avec la première voie d'admission de plateau chargé (33).

4. Machine d'inspection de vis sans fin axiale à trois broches selon l'une quelconque des revendications précédentes, dans laquelle la première ouverture d'évacuation de plateau chargé (102) sur la seconde paroi latérale (12) est pourvue d'une première porte de sécurité (120), la première porte de sécurité (120) comprend un panneau de porte (121), un cylindre de levage (122) et une paire de voies de guidage (123) ; le cylindre de levage (122) est fixé sur le côté intérieur de la seconde paroi latérale (12), la tige de piston du cylindre de levage (122) est connectée en étant fixée au côté supérieur du panneau de porte (121), la paire de voies de guidage (123) est agencée verticalement vers le côté intérieur de la seconde paroi latérale (12), et les deux côtés du panneau de porte (121) sont couplés avec la paire de voies de guidage (123).

5. Machine d'inspection de vis sans fin axiale à trois broches selon l'une quelconque des revendications précédentes, dans laquelle le mécanisme de plateau de transport de vis sans fin axiale de seconde classe (41) comprend un châssis et un chariot à galet installé sur le châssis, le chariot à galet comprend un jeu de galets électriques nivelé et juxtaposé, le chariot à galet comprend une extrémité d'admission et une extrémité d'évacuation par rapport à la direction d'alimentation du jeu de galets électriques ;
dans laquelle le mécanisme de plateau de transport de vis sans fin axiale de seconde classe (41) comprend en outre une plaque de support agencée verticalement, le second cylindre de levage est fixé sur la paroi latérale de la plaque de support ; la paroi latérale de la plaque de support est pourvue d'une voie de guidage, le châssis est pourvu d'une pièce coulissante, la pièce coulissante s'accouple avec la voie de guidage, la tige de piston du second cylindre de levage est agencée verticalement et est fixée avec la base du châssis ;
dans laquelle lorsque le second cylindre de levage est dans la position nulle, l'extrémité arrière de l'extrémité d'admission du chariot à galet dans le mécanisme de plateau de transport de vis sans fin axiale de seconde classe (41) est connectée avec la seconde voie d'admission de plateau de transport vide (32) et lorsque le second cylindre de levage est en extension, l'extrémité frontale de l'extrémité d'admission du chariot à galet dans le mécanisme de plateau de transport de vis sans fin axiale de seconde classe (41) est connectée avec la seconde voie d'évacuation de plateau chargé.

6. Machine d'inspection de vis sans fin axiale à trois broches selon l'une quelconque des revendications précédentes, dans laquelle la seconde ouverture d'évacuation de plateau chargé (103) sur la seconde paroi latérale (12) est pourvue d'une seconde porte de sécurité, la seconde porte de sécurité comprend un panneau de porte, un cylindre de levage et une paire de voies de guidage ; le cylindre de levage est fixé sur le côté intérieur de la seconde paroi latérale (12), la tige de piston du cylindre de levage est reliée de façon à être fixée avec le côté supérieur du panneau de porte, la paire de voies de guidage est agencée verticalement vers le côté intérieur de la seconde paroi latérale (12) et les deux côtés du panneau de porte s'accouplent avec la paire de voies de guidage.

7. Machine d'inspection de vis sans fin axiale à trois broches selon l'une quelconque des revendications précédentes, dans laquelle la troisième ouverture d'évacuation de plateau chargé (104) et la quatrième ouverture d'évacuation de plateau chargé (105) sur la troisième paroi latérale (13) sont pourvues d'une paire de portes à rideau (130).

8. Machine d'inspection de vis sans fin axiale à trois broches selon l'une quelconque des revendications précédentes, dans laquelle le dispositif d'inspection de première vis sans fin axiale (70) comprend une paire de têtes de détection (71) et un dispositif auto-tournant (72) à vis sans fin axiale; dans laquelle le dispositif auto-tournant à vis sans fin axiale comprend une paire de tiges tournantes juxtaposées (721) et un moteur (722) pour entraîner la paire de tiges tournantes à tourner de façon synchrone, dans laquelle les vis sans fin axiales non inspectées sont placées sur et entre la paire de tiges tournantes (721) ; et la paire de têtes de détection (71) est placée des deux côtés du dispositif auto-tournant (72) à vis sans fin axiale.

9. Machine d'inspection de vis sans fin axiale à trois broches selon l'une quelconque des revendications précédentes, dans laquelle le second dispositif d'inspection (80) de vis sans fin axiale comprend une paire de capteurs de fibre optique (81) et un dispositif d'arrêt (82) de vis sans fin axiale; dans laquelle le dispositif d'arrêt (82) de vis sans fin axiale comprend un panneau de base (821), une pièce de fixation (822), une première pièce de positionnement (823), une pièce de support (824), une pièce coulissante (825), une seconde pièce de positionnement (826) et un élément fileté de fixation (827) ; dans laquelle le panneau de base est pourvu d'une fente coulissante (820), la pièce de fixation (822) est fixée dans la fente coulissante (820), la pièce de fixation (822) est pourvue d'une fente, la première pièce de positionnement (823) s'enclenche dans la fente, la section en coupe transversale de la pièce de support (824) est en forme de V, la pièce de support (824) est fixée dans la fente coulissante (820), la pièce de support (824) est utilisée pour supporter les vis sans fin axiales non inspectées, la pièce coulissante (825) est pourvue d'un trou coulissant long, l'élément fileté de fixation (827) traverse le trou coulissant puis est connecté avec le panneau de base (821), l'élément fileté de fixation (827) fixe la pièce coulissante (825) dans la fente coulissante (825), la seconde pièce de positionnement (826) est fixée sur la pièce coulissante (825); dans laquelle la première pièce de positionnement (823) et la seconde pièce de positionnement (826) sont agencées de façon opposée l'une par rapport à l'autre aux deux côtés de la pièce de support (824); et la paire de capteurs de fibre optique (81) est agencée sur les deux côtés du dispositif d'arrêt de vis (82) sans fin axiale.
